# EUROPEAN PATENT SPECIFICATION

(11) **EP 1 773 561 B1**
(45) Date of publication and mention of the grant of the patent: **09.07.2008**
(21) Application number: 06752073.4
(22) Date of filing: 03.05.2006
(51) Int. Cl.: B29C 43/22, B29C 43/28

(54) **MOLDING FASTENER STEMS ONTO SUBSTRATE**
FORMEN VON VERBINDUNGSSCHÄFTEN AUF SUBSTRATE
MOULAGE DE TIGES D'ATTACHE SUR UN SUBSTRAT

(30) Priority: 05.05.2005 US 677992 P
(43) Date of publication of application: 18.04.2007
(73) Proprietor: VELCRO INDUSTRIES B.V., Curacao (AN)
(72) Inventor: TACHAUER, Ernesto, Bedford, New Hampshire 03110 (US)
(74) Representative: Müller-Boré & Partner Patentanwälte
(86) International application number: PCT/US2006/016769
(87) International publication number: WO 2006/121695

(56) References cited:
- WO-A-02/096233
- US-A- 5 260 015

## Description

### TECHNICAL FIELD

This invention relates to molding fastener stems onto substrate.

### BACKGROUND

Molding apparatus used to produce touch fastener products have been described in United States Patent No. 4,872,243 issued to Fischer and United States Patent No. 5,260,015 issued to Kennedy, et al. ("Kennedy"). Such molding apparatus introduce moldable resin into a gap adjacent a mold roll. Moldable resin can be, but is not necessarily in a molten state. Pressure is applied in the gap to force resin from the gap into mold cavities defined in the mold roll to form touch fasteners. Kennedy further describes introducing the resin into the gap between a preformed sheet material and the mold roll and bonding the resin to the preformed sheet material in the gap.

WO-A-02096233 describes methods of making fastner products with discrete fastner element regions.

### SUMMARY

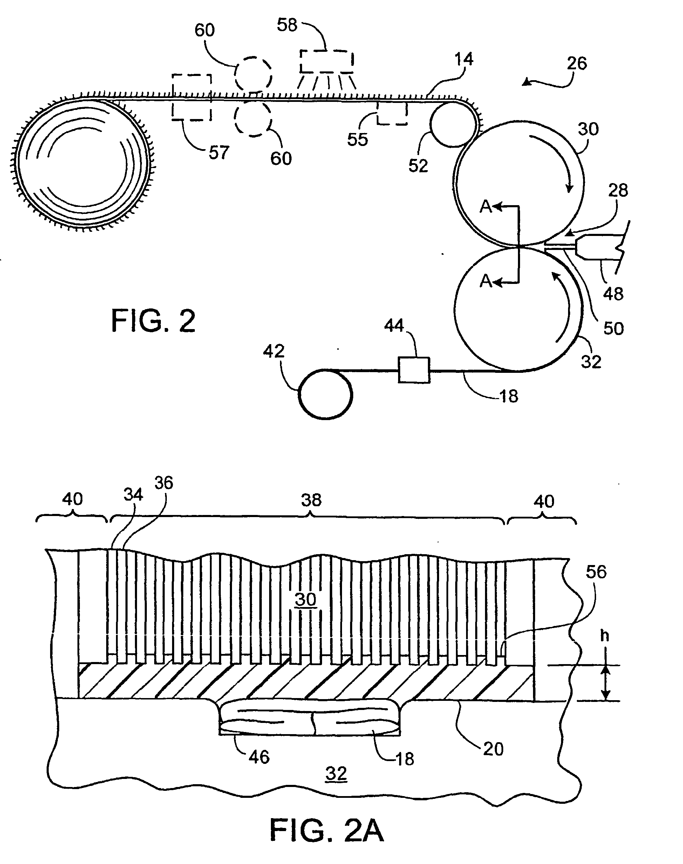

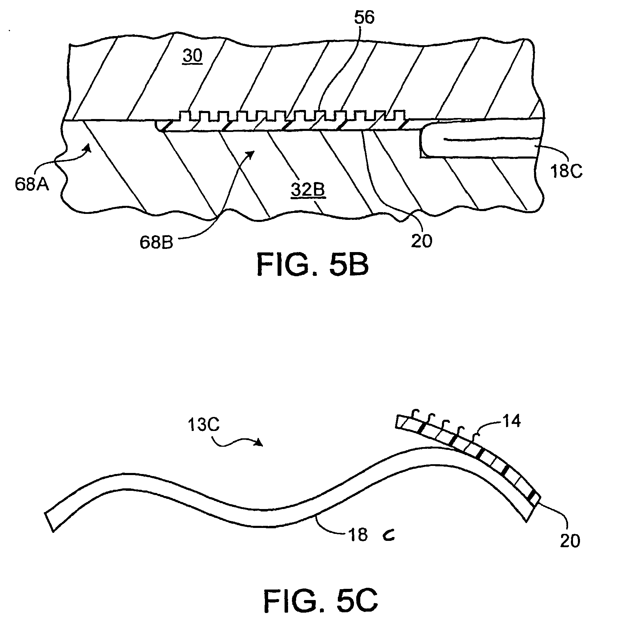

In one aspect of the invention, a method of manufacturing a fastener product according to claim 1. includes continuously introducing a sheet of preformed material to a gap defined adjacent a peripheral surface of a rotating mold roll; introducing a lane of moldable resin into the gap such that the lane of resin overlaps a longitudinal edge of the sheet; pressing the lane of moldable resin against the sheet in the gap, such that the resin becomes permanently bonded to the sheet in the overlapped region, while molding an array of stems from the resin in the thicker region, the stems extending from a base portion of the resin; and forming engageable heads on the stems to form fastener elements. The gap is configured with a step in thickness, the step defining a boundary between a relatively thicker gap region and a relatively thinner gap region, the sheet of preformed material being introduced to the gap with its longitudinal edge disposed within the thicker gap region (FIGS. 2, 2A, 5B and 5C).

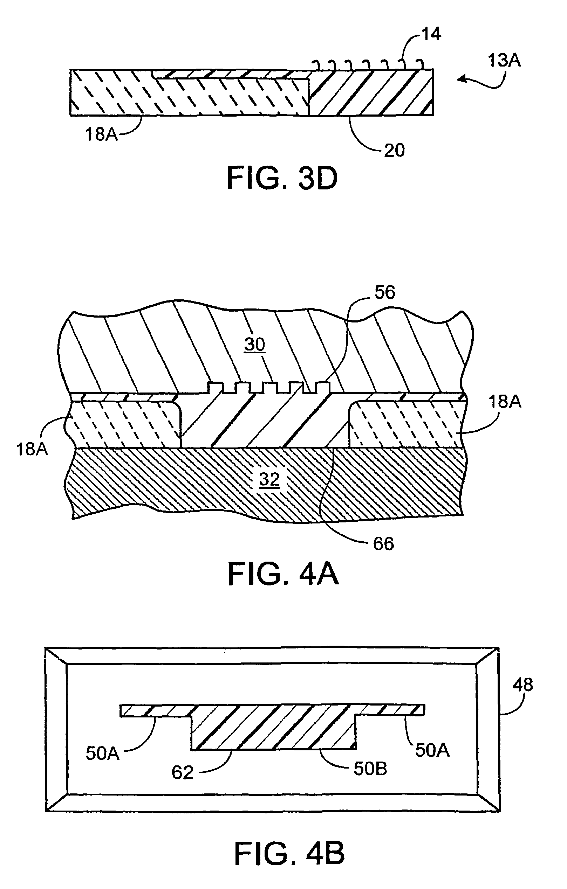

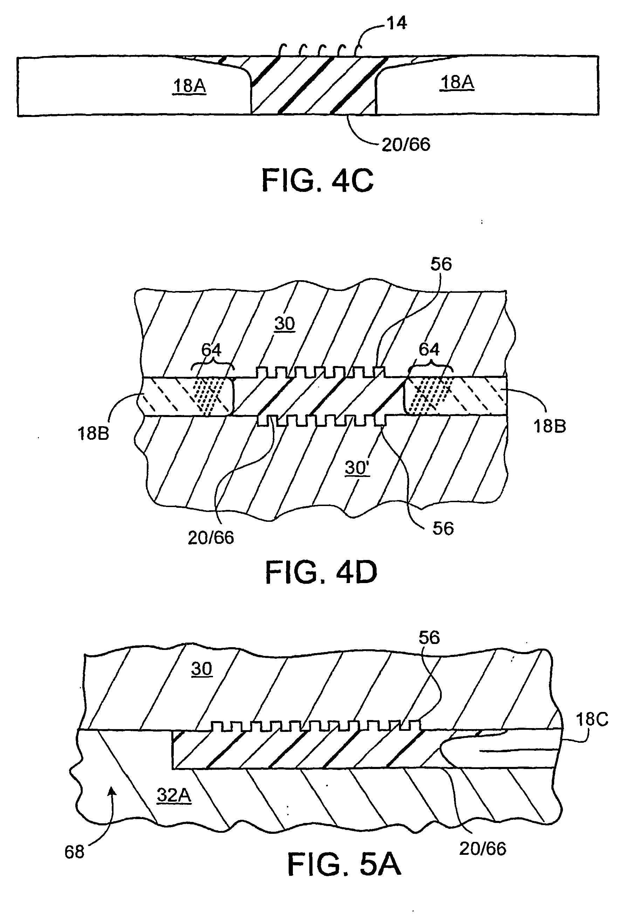

In another aspect of the invention, a method of manufacturing a fastener product according to claim 13, the method includes continuously introducing two sheets of preformed material to a gap defined adjacent a peripheral surface of a rotating mold roll, the sheets of preformed material positioned with an interval between them, introducing a lane of moldable resin into the gap such that the lane of resin overlaps longitudinal edges of the sheets adjacent the interval, the lane of moldable resin having a thinner region overlapping the sheets and a thicker region substantially aligned with the interval; pressing the lane of moldable resin against the sheets in the gap, such that the resin becomes permanently bonded to the sheets in the overlapped region, while molding an array of stems from the resin in the thicker region, the stems extending from a base portion of the resin; and forming engageable heads on the stems to form fastener elements (FIGS. 4A and 4B).

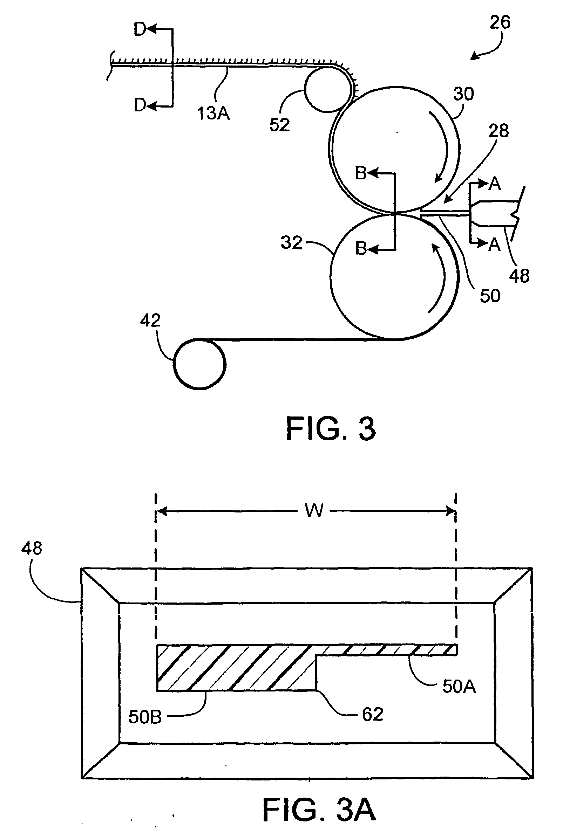

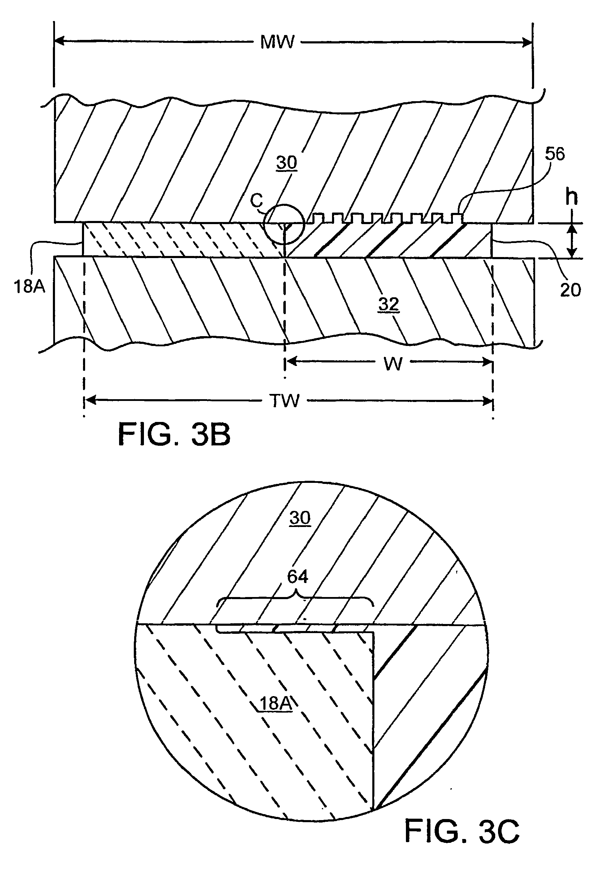

In another aspect of the invention, a method of manufacturing a fastener product according to claim 17 includes continuously introducing a sheet of preformed material to a gap defined adjacent a peripheral surface of a rotating mold roll; introducing a lane of moldable resin into the gap such that the lane of resin overlaps a longitudinal edge of the sheet, the lane of moldable resin having, as introduced to the gap, a relatively thinner region overlapping the sheet and a relatively thicker region extending beyond the sheet; pressing the lane of moldable resin against the sheet in the gap, such that the resin becomes permanently bonded to the sheet in the overlapped region, while molding an array of stems from the resin in the thicker region, the stems extending from a base portion of the resin; and forming engageable heads on the stems to form fastener elements (FIGS. 3 to 3D).

In some embodiments, the gap is defined between the mold roll and a counter-rotating pressure roll.

In some embodiments, the step in thickness corresponds to a change in diameter of the pressure roll and/or a change in diameter of the mold roll.

In some embodiments, the longitudinal edge of the sheet is defined by a longitudinal fold in the sheet.

In some embodiments, forming engageable heads comprises molding tapered ends on the stems to form loop-engageable hooks. In some alternate embodiments, forming engageable heads comprises applying heat and pressure to compress distal ends of the stems.

In some embodiments, the preformed material is a non-woven fabric, for example, a polyolefin non-woven fabric.

In some embodiments, the thickness of the preformed material is between about 0.0254 millimeter (0.001 inch) and 6.35 millimeters (0.25 inch) in the nip.

In some embodiments, the thickness of the base portion is between about 0.0254 millimeter (0.001 inch) and 6.35 millimeters (0.25 inch) (e.g. between about 0.635 millimeter (0.025 inch) and 6.35 millimeters (0.25 inch), between about 1.27 millimeters (0.05 inch) and 3.81 millimeters (0.15 inch), 0.381 millimeter (0.015 inch) and 2.54 millimeters (0.10 inch)).

In some embodiments, the lane of moldable resin comprises a first resin and a second resin. For example, in some fastener products, the array of stems is molded predominantly from a first resin and the base portion is formed predominantly from a second resin. In another example, in some fastener products, the second resin has a flexural modulus that less than half of a flexural modulus of the first resin. In some cases, the flexural modulus of the first resin is at least 690 megaPascals (100,000 pounds per square inch).

In some fastener products, the first resin and the second resin are attached to each other but substantially distinct in a region not overlapped. For example, in some cases, the lane of moldable resin has at least one longitudinal bead of the first resin disposed on a web of the second resin. In some cases, the lane of moldable resin includes polypropylene. In some cases, the base portion and fastener elements are translucent.

In some embodiments with an interval, the interval is at least 1.27 centimeters (0.5 inch) wide (e.g. at least 2.54 centimeters (1 inch) wide, at least 3.84 centimeters (1.5 inch) wide, at least 7.62 centimeters (3 inches) wide, at least 15.24 centimeters (6 inches) wide).

In some embodiments, the stems extend from opposing faces of the base portion of the resin.

It has been discovered that use of a vertical spacer in the gap adjacent a mold roll can function to help regulate the height of the gap and pressure applied in the gap, thus advantageously protecting soft substrates, protecting substances embedded in the resin, and/or allowing the formation of thicker resin bases while still providing sufficient pressure to force the moldable resin into the mold cavities for fastener formation.

The details of one or more embodiments of the invention are set forth in the accompanying drawings and the description below. Other features, objects, and advantages of the invention will be apparent from the description and drawings, and from the claims.

### DESCRIPTION OF DRAWINGS

FIG. 1 is a perspective view of a diaper with fastener tabs.
FIG. 1A is plan view of fastener tab engagement.
FIG. 2 is a diagrammatic view of an apparatus for producing fastener tabs as shown in FIGS. 1 and 1A.
FIG 2A is a cross-sectional view taken along A-A in FIG 2 of a nip with a mold-roll acting as a vertical spacer.
FIG 3 is alternate apparatus for continuous production of a fastener product with a single substrate acting as a vertical spacer.
FIG. 3A is a cross-sectional view of the extrusion die taken along A-A in FIG 3.
FIGS. 3B is a cross-sectional view taken along B-B in FIG 3 and FIG. 3C is more detailed view of region C noted on FIG. 3B.
FIG. 3D is a cross-sectional view of the resulting fastener product taken along D-D in FIG. 3.
FIGS. 4A-4B are, respectively, cross-sectional views of the nip of an alternate apparatus with two substrates acting as vertical spacers and an associated extrusion die.
FIG. 4C is a cross-sectional view of the resulting fastener product.
FIG. 4D is a cross-sectional of the nip of an alternate embodiment of the apparatus.
FIG. 5A is a cross-sectional view of an apparatus with a stepped pressure roll acting as a vertical spacer.
FIGS. 5B and 5C are, respectively, cross-sectional views of an alternate embodiment of a stepped pressure roll and the resulting fastener product.
FIG. 6 is a schematic view of an apparatus for producing a fastener product using multiple resins.
FIGS. 7A and 7B are cross-sectional views of the nip of alternate embodiments of the apparatus shown in FIG. 6.

Like reference symbols in the various drawings indicate like elements.

### DETAILED DESCRIPTION

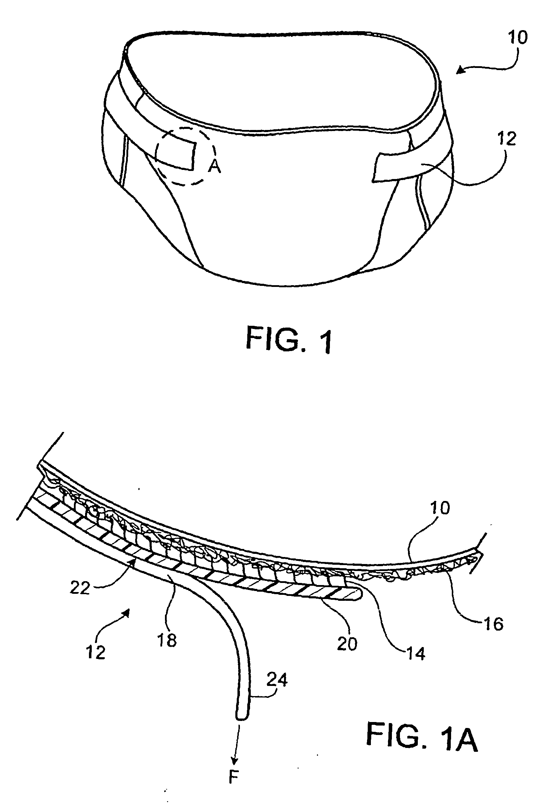

Touch fasteners are useful in many applications. For example, referring to FIGS. 1 and 1A, a diaper 10 is closed using touch fasteners tabs 12 with male fastener elements 14 to engage loop material 16 mounted on the diaper. For purposes of illustration, the size of the male fastener elements 14 is exaggerated. The fastener tabs 12 are formed with a substrate 18 bonded to a resin base 20 from which the male fastener elements 14 extend. Bonding the substrate 18 to the resin base 20 only at a discrete central region 22 is believed to provide increased fastening strength. Without wishing to be bound by theory, it is anticipated that a disengagement force F applied to grasping tab 24 will primarily result in shear, rather than peel, force being applied to the engagement between the male fastener elements 14 and the loop material 16. This helps prevent inadvertent release of a fastener product (e.g. by a toddler playing with a diaper fastener tab or by a patient catching the edge of a splint on the edge of a piece of furniture).

Referring to FIG. 2, it has been discovered that such fastener products can be efficiently produced in a molding apparatus 26 and that use of a vertical spacer in the gap 28 adjacent a mold roll 30 can help regulate the height of the gap and the pressure applied in the gap, thus advantageously protecting soft substrates and/or allowing the formation of thicker resin bases while still providing sufficient pressure to force the moldable resin into the mold cavities 56 for fastener formation. In this apparatus 26, the gap 28 is a nip defined between the mold roll 30 and a counter-rotating pressure roll 32. Referring to FIG. 2A, the mold roll 30 is assembled from multiple tool rings 34 and spacer rings 36 in a tooling region 38 and spacer rings in end regions 40 on either side of the tooling region. In this case, the spacer rings 36 in the end regions 40 are also used as vertical spacers that provide a mechanical limit helping control the height h of the nip 28 and the amount of pressure applied to the resin and thus to the folded substrate 18. Because the mold roll 30 and pressure roll 32 are in close proximity if not in actual contact, the spacer rings in end regions 40 comprise an engineering elastomer, at least on their outer surfaces, to limit damage to the rolls 30, 32 due to contact between the rolls. However, as is discussed below, the substrate 18 and/or portions of the mold roll can also be used as a vertical spacer.

The substrate 18 proceeds from a feed roll 42 through folding station 44 to pressure roll 32 where it is received in a channel 46 defined in the pressure roll 32 that conveys it into the nip 28 in the folded configuration provided by the folding station. An extruder 48 discharges a molten resin web 50 into the nip 28. A portion of the folded substrate 18 is exposed to contact the resin web 50. The substrate 18 is chosen to be physically and/or compositionally compatible with the resin in order to bond with the resin base 20 forming the central bonding region 22 (FIG 1A). Examples of possible substrates include woven and non-woven fabrics, paper, plastics, and rubber.

Pressure applied in the nip causes the molten resin to enter mold cavities 56, defined by the tool rings 34, which are configured to mold the molten resin into desired shapes (e.g. hooks with loop-engageable heads). For purposes of illustration, the size of the mold cavities is exaggerated and the number of mold cavities and associated tool and spacer rings is reduced in all of the Figures showing mold cavities. All of the mold rolls are assembled of tool and spacer rings although individual rings are only shown in FIG. 2A.

The mold roll 30 is temperature controlled to solidify the molten resin as a base 20 and molded hooks 14 extending from the base. The hooks 14, resin base 20, and attached substrate 18 are stripped from the mold roll 30 by tension applied at stripping roll 52. The resulting fastener product is gathered on storage roll 54. Optional unfolding station 55 may be included to unfold the substrate to make roll storage more efficient. Similarly, optional cutter 57 may be provided to separate portions of the fastener product from each other (e.g. slice a wide multiple lane product into discrete narrower strips).

In an alternate embodiment of the apparatus, the mold cavities 56 are configured to form the male fastener elements 14 as stems whose loop-engageable heads are formed by post-processing after the stems are stripped from the mold roll 30. For example in such an alternate embodiment, an optional radiant heater 58 and heading rolls 60 are added to the apparatus with the radiant heater 58 softening the stems 14 before heading rolls 60 deform the ends of the stems to form loop-engageable heads.

Referring to FIG. 3, a similar apparatus for forming fastener products uses a substantially rigid substrate 18 as a vertical spacer. Referring to FIG. 3A, the extruder 48 has a die lip 62 which shapes the extruded resin web to form a relatively thin portion 50A and relatively thick portion 50B. Referring to FIGS. 3B and 3C, the resin web 50 is fed into the nip 28 with the thin portion 50A aligned to overlap the substrate 18 in an overlap region 64 with the resin between the substrate and the mold roll 30. The thick portion 50B of the resin web abuts the substrate 18 and is aligned with the mold cavities 56 of the mold roll 30. This distribution of the resin is thought to enhance both bonding of the resin with the substrate and filling of the mold cavities by the resin. The distribution of resin is predominantly influenced by characteristics and operating parameters of the extruder 48 particularly the shape of the die lip 62. However, the shape of the resin web does not exactly match the desired resin distribution and so is often adjusted during machine design and setup to achieve the desired distribution.

Other resin-substrate configurations can be used with this apparatus. For example, referring to FIGS. 4A-4C, this apparatus can also be used with two strips of substrate 18 bracketing a lane 66 of resin. This approach provides more balanced support internal to the nip 28. The extruder 48 has a die lip 62 that provides the desired resin distribution to produce a lane of fastener elements 14 between two lines of substrate. In a further variation, the pressure roll 32 can be replaced with a second mold roll 30'to produce fastener products with fastener elements extending from opposing faces. The exemplary embodiment illustrated in FIG. 4D uses a substrate with porosity such that resin in the overlap regions 64 penetrates into the substrate rather than remaining on its surface. Moreover, in addition to being compatible with the substrate 18, the resin can be a translucent resin chosen to provide visibility of designs through the resin strip.

Referring again to FIG 3A, using molding apparatus with a machine width MW of 5.08 centimeters (2 inches) allows production of single strip of fastener product whose total width TW (i.e. the combined width of the substrate 18 and the attached resin strip 20) approximates that of the machine width. However, such a molding apparatus also allows production of multiple narrower substrate-resin strips (e.g. five strips of fastener products each with a total width TW of 5.08 centimeters (2 inches)). Typically, multiple strips are produced with sides of adjacent strips abutting and attached to each other in a combined strip which is cut or separated during post-processing to produce the individual strips. Molding apparatuses are available with varying machine widths.

The substrate chosen for use with this apparatus should be substantially rigid. In other words, the substrate 18 should be sufficiently incompressible (or compressible to a rigid form) to help regulate the height h of the gap 28. However, the substrate should be compressible enough to give slightly in the overlap region to provide space between the mold roll 30 and the substrate 18 to receive the resin predominantly on the surface of the substrate (FIGS. 3B-3C). Alternate substrates 18 are porous enough to receive the resin within internal voids (FIG 4D). For example, typical spun-bound non-woven fabrics have been found to possess appropriate porosities for this purpose. In some embodiments, an incompressible substrate is machined to a reduced thickness in the overlap region 64 in order to receive the resin and/or a shallow recess can be provided in the mold roll 30 aligned with the overlap region 64.

However, in some instances, it is not feasible to use the substrate as a vertical spacer. For example, it is sometimes useful to make a fastener product with a 'soft' substrate that is too compressible to function as a vertical spacer. Such substrates may be desirable because they provide, for example, a skin-friendly surface for applications where the fastener product may come in contact with a user's skin (e.g. medical wraps such as elastic bandages used for wrapping injured joints). In another example, it may be desirable to use a thin substrate or no substrate while embedding an object in the resin passing through the nip that may be damaged by pressure applied in the nip or by contact with mold roll if the height of the resin strip is not tall enough.

Referring to FIGS. 5A-5C, a molding apparatus for such applications uses a step 68 in the pressure roll 32A, 32B as a vertical spacer. As in the molding apparatuses described above, moldable resin is fed into a calender nip with a substrate. In this case, the substrate is a soft substrate 18B. However, the substrate is protected from excessive compression by step 68 in pressure roll 32A. Referring to FIG 5A, the illustrated single step pressure roll 32A produces a fastener product with a resin base approximately twice as thick as attached substrate 18B. By feeding the substrate 18B into the nip 28 in a folded configuration, wider fastener products can be produced on molding apparatus with a specific machine width than would be possible if the substrate was fed in flat. Referring to FIG. 5B and 5C, when a fastener product 13C with a thinner resin base is desired, a pressure roll 32B with two steps 68, 68B is used.

Because the mold roll 30 and pressure roll 32 are in close proximity if not in actual contact, the spacer rings (not shown individually) making up the mold roll 30 adjacent the step 68 comprise an engineering elastomer, at least on their outer surfaces, to limit damage to the rolls 30, 32 due to contact between the rolls. Other approaches to protecting the rolls 30, 32 from contact damage are possible, including, for example, by providing the pressure roll 32 with a protective coating in the vicinity of the step 68 or by recycling a strip of protective material to loop between the mold roll 30 and the pressure roll.

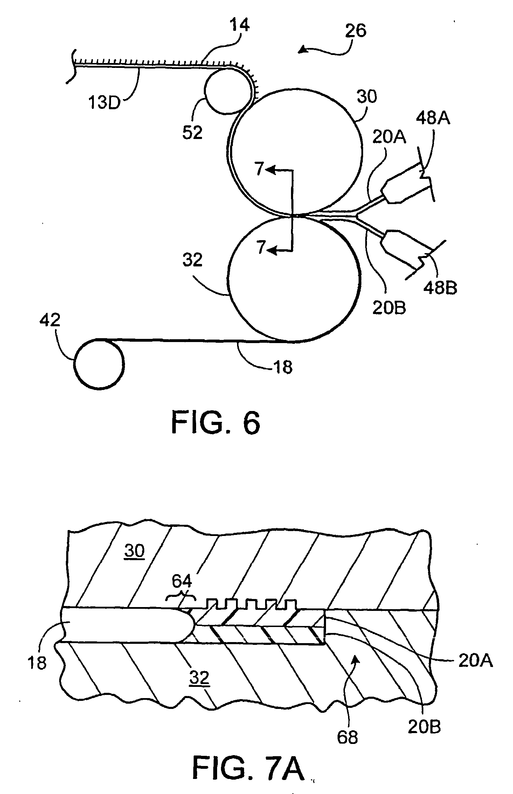

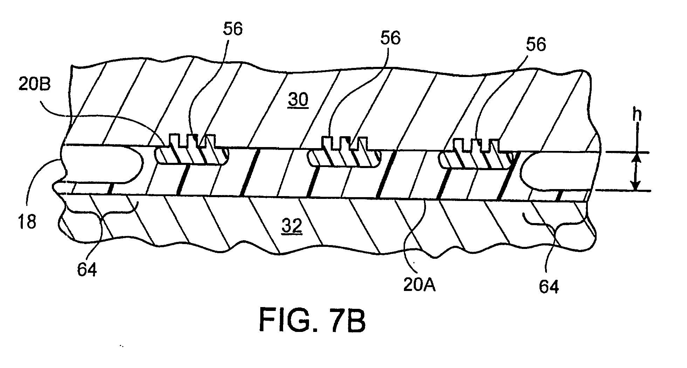

Vertical spacers as described above are also useful in the formation of fastener products from two resins while minimizing mixing between the resins due pressure applied in the nip. Referring to FIG. 6, a molding apparatus similar to those discussed above has two extruders 48A, 48B feeding two resins 20A, 20B into the calender nip 28 with substrate 18. In one example, referring to FIG. 7A, a resin with a flexural modulus of greater than 345 megaPascals (50,000 pounds per square inch) as measured in accordance with ASTM D790 (e.g. greater than 520 megaPascals (75,000 pounds per square inch), greater than 690 megaPascals (100,000 pounds per square inch)) is chosen as first resin 20A and a resin with a flexural modulus of less than 345 megaPascals (50,000 pounds per square inch) (e.g. less than 170 megaPascals (25,000 pounds per square inch), less than 70 megaPascals (10,000 pounds per square inch)) is chosen as second resin 20B. In this example, the apparatus is used with a stepped mold roll and a rigid substrate as vertical spacers to form a fastener product 13D with hooks made from a 'tough' resin extending from a resin base with an opposing face made from a relatively 'softer' resin is thought to help provide durable reusable hooks on a skin-friendly base. The resins 20A, 20B can be chosen for other desired properties (e.g. one could be hydrophilic and one hydrophobic) but the two resins should be compatible enough that passage through the nip together bonds them to each other as well as to any accompanying substrate 18.

In another example, using two substrate strips as the vertical spacers, first resin 20A is fed into is 28 in discrete longitudinally extending beads between second resin 20B and mold roll 30. Although second resin 20B fills in around first resin 20A, the two resins 20A and 20B remain substantially distinct. If the two resins are present in the overlapped region 64, it is anticipated that more mixing would occur. The substrates 18, acting as vertical spacers, serve to help regulate nip height such that pressure applied in the nip 28 forces first resin 20A into mold cavities 56 and laminates second resin 20B to substrates 18 without mixing the resins to the point that they lose their distinct desired properties.

Various modifications may be made for example, the gap adjacent the mold roll could be defined between the mold roll and an extruder rather than between the mold roll and a pressure roll.

## Claims

1. A method of manufacturing a fastener product, the method comprising:
continuously introducing a sheet (18C) of preformed material to a gap (28) defined adjacent a peripheral surface of a rotating mold roll (30);
introducing a lane (66) of moldable resin (50) into the gap (28) such that the lane (66) of resin (50) overlaps a longitudinal edge of the sheet (18C)
pressing the lane (66) of moldable resin (50) against the sheet (18C) in the gap (28), such that the resin (50) becomes permanently bonded to the sheet (18C) in the overlapped region while
molding an array of stems from the resin (50) in the thicker region, the stems extending from a base portion (20) of the resin (50); and
forming engageable heads on the stems to form fastener elements;
wherein the gap (28) is configured with a step in thickness, the step defining a boundary between a relatively thicker gap region and a relatively thinner gap region, the sheet (18C) of preformed material being introduced to the gap (28) with its longitudinal edge disposed within the thicker gap region.

2. The method of claim 1 wherein the gap (28) is defined between the mold roll (30) and a counter-rotating pressure roll (32).

3. The method of claim 1 or claim 2 wherein the step in thickness corresponds to a change in diameter of the pressure roll (32) or to a change in diameter of the mold roll (30).

4. The method of any of the preceding claims wherein the longitudinal edge of the sheet (18C) is defined by a longitudinal fold in the sheet (18C).

5. The method of any of the preceding claims wherein forming engageable heads comprises molding tapered ends on the stems to form loop-engageable hooks or applying beat and pressure to compress distal ends of the stems.

6. The method of any of the preceding claims wherein the preformed material (18C) is a non-woven fabric.

7. The method of any of the preceding claims wherein the thickness of the base portion (20) is between about 0.635 millimeter (0.025 inch) and 6.35 millimeters (0.25 inch), particularly wherein the thickness of the base portion (20) is between about 1.27 millimeters (0.05 inch) and 3.81 millimeters (0.15 inch).

8. The method of any of the preceding claims wherein the lane (66) of moldable resin (50) comprises a first resin and a second resin.

9. The method of claim 8 wherein the array of stems is molded predominantly from the first resin and the base portion (20) is formed predominantly from the second resin.

10. The method of claim 8 or claim 9 wherein the second resin has a flexural modulus that less than half of a flexural modulus of the first resin.

11. The method of any of claims 8-10 wherein the first resin and the second resin are attached to each other but substantially distinct in region not overlapped.

12. The method of any of claims 8-11 wherein the lane (66) of moldable resin (50) comprises at least one longitudinal bead of the first resin disposed on a web of the second resin.

13. A method of manufacturing a fastener product, the method comprising:
continuously introducing two sheets (18A) of preformed material to a gap (28) defined adjacent a peripheral surface of a rotating mold roll (30), the sheets (18A) of preformed material positioned with an interval between them,
introducing a lane (66) of moldable resin (50) into the gap (28) such that the lane (66) of resin (50) overlaps longitudinal edges of the sheets (18A) adjacent the interval, the lane (66) of moldable resin (50) having a thinner region overlapping the sheets (18A) and a thicker region substantially aligned with the interval;
pressing the lane (66) of moldable resin (50) against the sheets (18A) in the gap (28), such that the resin (50) becomes permanently bonded to the sheets (18A) in the overlapped region (64), while
molding an array of stems from the resin (50) in the thicker region, the stems extending from a base portion (20) of the resin (50); and
forming engageable beads on the stems to form fastener elements.

14. The method of claim 13 wherein the interval is at leat 2.54 centimeters (i inch) wide, particularly wherein the interval is at least 7.62 centimeters (3 inches) wide.

15. The method of claim 13 or claim 14 wherein the stems extend from opposing faces of the base portion (20) of the resin (50).

16. The method of any of claims 13-15 wherein the thickness of the base portion (20) is between about 0.635 millimeter (0.025 inch) and 6.35 millimeters (0.25 inch).

17. A method of manufacturing a fastener product, the method comprising:
continuously introducing a sheet (18A) of preformed material to a gap (28) defined adjacent a peripheral surface of a rotating mold roll (30),
introducing a lane (66) of moldable resin (50) into the gap (28) such that the lane (66) of resin (50) overlaps a longitudinal edge of the sheet (18A), the lane (66) of moldable resin (50) having, as introduced to the gap (28), a relatively thinner region overlapping the sheet (18A) and a relatively thicker region extending beyond the sheet (18A);
pressing the lane (66) of moldable resin (50) against the sheet (18A) in the gap (28), such that the resin (50) becomes permanently bonded to the sheet (18A) in the overlapped region (64), while
molding an array of stems from the resin (50) in the thicker region, the stems extending from a base portion (20) of the resin (50); and
forming engageable heads on the stems to form fastener elements.

18. The method of claim 17 wherein the thickness of the base portion (20) is between about 0.635 millimeter (0.025 inch) and 6.35 millimeters (0.25 inch).

## Patentansprüche

1. Verfahren zum Herstellen eines Verschluss- bzw. Befestigungsprodukts, wobei das Verfahren umfasst:
kontinuierliches Einführen einer Schicht (18C) bzw. Folie bzw. Lage aus vorgeformtem Material an einen Spalt (28), der angrenzend an eine Umfangsfläche einer rotierenden Formwalze (30) definiert ist;
Einführen einer Bahn (66) aus formbarem Harz (50) in den Spalt (28), so dass die Bahn (66) aus Harz (50) einen Längsrand (50) der Schicht (18C) überlappt;
Pressen der Bahn (66) aus formbarem Harz (50) gegen die Schicht (18C) in dem Spalt (28), so dass das Harz (50) permanent an die Schicht (18C) in der überlappten Region geklebt wird, während
eine Anordnung bzw. ein Bereich von Stielen bzw. Schäften aus dem Harz (50) in der dickeren Region geformt wird, wobei die Stiele sich von einem Basisabschnitt (20) des Harzes (50) aus erstrecken; und
in Eingriff bringbare Köpfe auf den Stielen ausgebildet werden, um Verschlusselemente auszubilden;
wobei der Spalt (28) mit einer Stufe in der Dicke aufgebaut ist, wobei die Stufe eine Grenze zwischen einer relativ dickeren Spaltregion und einer relativ dünneren Spaltregion definiert, wobei die Schicht (18C) aus vorgeformtem Material in den Spalt (28) eingeführt wird, wobei ihr Längsrand in der dickeren Spaltregion angeordnet ist.

2. Verfahren nach Anspruch 1, wobei der Spalt (28) zwischen der Formwalze (30) und einer gegenläufigen Druckwalze (32) definiert ist.

3. Verfahren nach Anspruch 1 oder Anspruch 2, wobei die Dickenstufe einer Änderung des Durchmessers der Druckwalze (32) oder einer Änderung des Durchmessers der Formwalze (30) entspricht.

4. Verfahren nach einem der vorangehenden Ansprüche, wobei der Längsrand der Schicht (18C) durch eine Längsfaltung in der Schicht (18C) definiert ist.

5. Verfahren nach einem der vorangehenden Ansprüche, wobei das Ausbilden von in Eingriff bringbaren Köpfen umfasst: das Formen konisch bzw. verjüngt zulaufender Enden auf den Stielen, um mit Schlingen bzw. Schlaufen bzw. Schleifen in Eingriff bringbare Haken auszubilden, oder das Anwenden von Wärme und Druck, um distale Enden der Stiele zusammenzudrücken.

6. Verfahren nach einem der vorangehenden Ansprüche, wobei das vorgeformte Material (18C) ein Nichtgewebe- bzw. Vliesmaterial ist.

7. Verfahren nach einem der vorangehenden Ansprüche, wobei die Dicke des Basisabschnitts (20) zwischen etwa 0.635 Millimeter (0,025 Inch) und 6,35 Millimeter (0,25 Inch) liegt, wobei die Dicke des Basisabschnitts (20) bevorzugt zwischen etwa 1,27 Millimeter (0,05 Inch) und 3,81 Millimeter (0,15 Inch) liegt.

8. Verfahren nach einem der vorangehenden Ansprüche, wobei die Bahn (66) aus formbarem Harz (50) ein erstes Harz und ein zweites Harz umfasst.

9. Verfahren nach Anspruch 8, wobei die Anordnung der Stiele vorwiegend aus dem ersten Harz geformt wird und der Basisabschnitt (20) vorwiegend aus dem zweiten Harz ausgebildet wird.

10. Verfahren nach Anspruch 8 oder 9, wobei das zweite Harz einen Biegemodul hat, der weniger als die Hälfte eines Biegemoduls des ersten Harzes ist.

11. Verfahren nach einem der Ansprüche 8 - 10, wobei das erste Harz und das zweite Harz aneinander befestigt werden, aber in einer nicht überlappten Region im Wesentlichen verschieden voneinander sind.

12. Verfahren nach einem der Ansprüche 8 - 11, wobei die Bahn (66) aus formbarem Harz (50) zumindest eine längslaufende Wulst aus dem ersten Harz umfasst, die auf einer Gewebebahn aus dem zweiten Harz angeordnet ist.

13. Verfahren zur Herstellung eines Verschlussprodukts, wobei das Verfahren umfasst:
kontinuierliches Einführen von zwei Schichten (18A) bzw. Folien bzw. Lagen aus vorgeformtem Material an einen Spalt (28), der angrenzend an eine Umfangsfläche einer rotierenden Formwalze (30) definiert ist, wobei die Schichten (18A) aus vorgeformtem Material mit einem Abstand dazwischen positioniert werden;
Einführen einer Bahn (66) aus formbarem Harz (50) in den Spalt (28), so dass die Bahn (66) aus Harz (50) Längsränder der Schichten (18A) angrenzend an den Abstand überlappt, wobei die Bahn (66) aus formbarem Harz (50) eine dünnere Region hat, welche die Schichten (18A) überlappt und eine dickere Region, die im Wesentlichen mit dem Abstand ausgerichtet ist;
Pressen der Bahn (66) aus formbarem Harz (50) gegen die Schichten (18A) in dem Spalt (28), so dass das Harz (50) permanent an die Schichten (18A) in der überlappten Region (64) geklebt wird, während
eine Anordnung bzw. ein Bereich von Stielen aus dem Harz (50) in der dickeren Region geformt wird, wobei die Stiele sich von einem Basisabschnitt (20) der Harzes (50) aus erstrecken; und
in Eingriff bringbare Köpfen auf den Stielen ausgebildet werden, um Verschlusselemente auszubilden.

14. Verfahren nach Anspruch 13, wobei der Abstand zumindest 2,54 Zentimeter (1 Inch) breit ist, wobei der Abstand vorzugsweise zumindest 7,62 Zentimeter (3 Inch) breit ist.

15. Verfahren nach Anspruch 13 oder 14, wobei die Stiele sich von entgegengesetzten Flächen des Basisabschnitts (20) des Harzes (50) erstrecken.

16. Verfahren nach einem der Ansprüche 13 - 15, wobei die Dicke des Basisabschnitts (20) zwischen etwa 0,635 Millimeter (0,025 Inch) und 6,35 Millimeter (0,25 Inch) liegt.

17. Verfahren zur Herstellung eines Verschlussprodukts, wobei das Verfahren umfasst:
kontinuierliches Einführen einer Schicht (18A) bzw. Folie bzw. Lage aus vorgeformtem Material an einen Spalt (28), der angrenzend an eine Umfangsfläche einer rotierenden Formwalze (30) definiert ist;
Einführen einer Bahn (66) aus formbarem Harz (50) in den Spalt (28), so dass die Bahn (66) aus Harz (50) einen Längsrand (50) der Schicht (18A) überlappt, wobei die Bahn (66) aus formbarem Harz (50) beim Einführen in den Spalt (28) eine relativ dünnere Region hat, welche die Schicht (18A) überlappt, und eine relativ dickere Region, die sich über die Schicht (18A) hinaus erstreckt;
Pressen der Bahn (66) aus formbarem Harz (50) gegen die Schicht (18A) in dem Spalt (28), so dass das Harz (50) permanent an die Schicht (18A) in der überlappten Region geklebt wird, während
eine Anordnung von Stielen aus dem Harz (50) in der dickeren Region geformt wird, wobei die Stiele sich von einem Basisabschnitt (20) der Harzes (50) aus erstrecken; und
Ausbilden von in Eingriff bringbaren Köpfen auf den Stielen, um Verschlusselemente auszubilden.

18. Verfahren nach Anspruch 17, wobei die Dicke des Basisabschnitts (20) zwischen etwa 0,635 Millimeter (0,025 Inch) und 6,35 Millimeter (0,25 Inch) liegt.

## Revendications

1. Méthode de fabrication d'un produit de fixation, la méthode comprenant :
l'introduction en continu d'une feuille (18C) de matériau pré-formé vers une fente (28) définie en adjacence à une surface périphérique d'un rouleau de moulage en rotation (30) ;
l'introduction d'une trajectoire (66) de résine pouvant être moulée (50) dans la fente (28) de telle sorte que la trajectoire (66) de résine (50) recouvre un bord longitudinal de la feuille (18C) ;
le pressage de la trajectoire (66) de résine pouvant être moulée (50) contre la feuille (18C) dans la fente (28) de telle sorte que la résine (50) soit agglomérée en permanence à la feuille (18C) dans la région recouverte, pendant
le moulage d'une rangée de tiges depuis la résine (50) dans la région plus épaisse, les tiges s'étendant depuis une partie de base (20) de la résine (50) ; et
le moulage de têtes pouvant être engagées, sur les tiges, afin de former les éléments de fixation ;
dans laquelle la fente (28) est configurée avec un gradin dans l'épaisseur, le gradin définissant une limite entre une région de fente relativement plus épaisse et une région de fente relativement plus mince, la feuille (18C) de matériau pré-formé étant introduite vers la fente (28) avec son bord longitudinal agencé à l'intérieur de la région de fente plus épaisse.

2. Méthode selon la revendication 1, dans laquelle la fente (28) est définie entre le rouleau de moulage (30) et un rouleau de pression qui tourne en sens contraire (32).

3. Méthode selon l'une ou l'autre des revendications 1 et 2, dans laquelle le gradin dans l'épaisseur correspond à une modification du diamètre du rouleau de pression (32) ou à une modification du diamètre du rouleau de moulage (30).

4. Méthode selon l'une quelconque des revendications précédentes, dans laquelle le bord longitudinal de la feuille (18C) est défini par un repli longitudinal dans la feuille (18C).

5. Méthode selon l'une quelconque des revendications précédentes, dans laquelle le moulage des têtes pouvant être engagées comprend le moulage des extrémités coniques sur les tiges afin de former des crochets pouvant être engagés dans des bouclettes, ou l'application de la chaleur et de la pression afin de comprimer les extrémités distales des tiges.

6. Méthode selon l'une quelconque des revendications précédentes, dans laquelle le matériau préformé (18C) est une structure non tissée.

7. Méthode selon l'une quelconque des revendications précédentes, dans laquelle l'épaisseur de la partie de base (20) est comprise entre environ 0,635 millimètre (0,025 pouce) et 6,35 millimètres (0,25 pouce), en particulier dans laquelle l'épaisseur de la partie de base (20) est comprise entre environ 1,27 millimètre (0,05 pouce) et 3,81 millimètres (0,15 pouce).

8. Méthode selon l'une quelconque des revendications précédentes, dans laquelle la trajectoire (66) de résine pouvant être moulée (50) comprend une première résine et une seconde résine.

9. Méthode selon la revendication 8, dans laquelle la rangée de tiges est moulée principalement depuis la première résine et dans laquelle la partie de base (20) est moulée principalement depuis la seconde résine.

10. Méthode selon l'une ou l'autre des revendications 8 et 9, dans laquelle la seconde résine a un module de flexion qui est inférieur à la moitié d'un module de flexion de la première résine.

11. Méthode selon l'une quelconque des revendications 8 à 10, dans laquelle la première résine et la seconde résine sont fixées l'une à l'autre, mais sont sensiblement distinctes dans la région non recouverte.

12. Méthode selon l'une quelconque des revendications 8 à 11, dans laquelle la trajectoire (66) de résine pouvant être moulée (50) comprend au moins une nervure longitudinale de la première résine, agencée sur une bande de la seconde résine.

13. Méthode de fabrication d'un produit de fixation, la méthode comprenant :
l'introduction en continu de deux feuilles (18A) de matériau pré-formé vers une fente (28) définie en adjacence à une surface périphérique d'un rouleau de moulage en rotation (30), les feuilles (18A) de matériau pré-formé étant positionnées avec un intervalle entre elles ;
l'introduction d'une trajectoire (66) de résine pouvant être moulée (50) dans la fente (28) de telle sorte que la trajectoire (66) de résine (50) recouvre les bords longitudinaux des feuilles (18A) en adjacence à l'intervalle, la trajectoire (66) de résine pouvant être moulée (50) ayant une région plus mince qui recouvre les feuilles (18A) et une région plus épaisse sensiblement alignée avec l'intervalle ;
le pressage de la trajectoire (66) de résine pouvant être moulée (50) contre les feuilles (18A) dans la fente (28) de telle sorte que la résine (50) soit agglomérée en permanence aux feuilles (18A) dans la région recouverte (64), pendant
le moulage d'une rangée de tiges depuis la résine (50) dans la région plus épaisse, les tiges s'étendant depuis une partie de base (20) de la résine (50) ; et
le moulage de têtes pouvant être engagées, sur les tiges, afin de former les éléments de fixation.

14. Méthode selon la revendication 13, dans laquelle l'intervalle a une largeur d'au moins 2,54 centimètres (1 pouce), en particulier dans laquelle l'intervalle a une largeur d'au moins 7,62 centimètres (3 pouces).

15. Méthode selon l'une ou l'autre des revendications 13 et 14, dans laquelle les tiges s'étendent depuis les faces opposées de la partie de base (20) de la résine (50).

16. Méthode selon l'une quelconque des revendications 13 à 15, dans laquelle l'épaisseur de la partie de base (20) est comprise entre environ 0,635 millimètre (0,025 pouce) et 6,35 millimètres (0,25 pouce).

17. Méthode de fabrication d'un produit de fixation, la méthode comprenant :
l'introduction en continu d'une feuille (18A) de matériau pré-formé vers une fente (28) définie en adjacence à une surface périphérique d'un rouleau de moulage en rotation (30) ;
l'introduction d'une trajectoire (66) de résine pouvant être moulée (50) dans la fente (28) de telle sorte que la trajectoire (66) de résine (50) recouvre un bord longitudinal de la feuille (18A), la trajectoire (66) de résine pouvant être moulée (50) ayant, lorsqu'elle est introduite vers la fente (28), une région relativement plus mince qui recouvre la feuille (18A) et une région relativement plus épaisse qui s'étend au-delà la feuille (18A) ;
le pressage de la trajectoire (66) de résine pouvant être moulée (50) contre la feuille (18A) dans la fente (28) de telle sorte que la résine (50) soit agglomérée en permanence à la feuille (18A) dans la région recouverte (64), pendant
le moulage d'une rangée de tiges depuis la résine (50) dans la région plus épaisse, les tiges s'étendant depuis une partie de base (20) de la résine (50) ; et
le moulage de têtes pouvant être engagées, sur les tiges, afin de former les éléments de fixation ;

18. Méthode selon la revendication 17, dans laquelle l'épaisseur de la partie de base (20) est comprise entre environ 0,635 millimètre (0,025 pouce) et 6,35 millimètres (0,25 pouce).
